# EUROPÄISCHE PATENTANMELDUNG

(11) **EP 2 158 806 A1**
(43) Veröffentlichungstag der Anmeldung: **03.03.2010**
(21) Anmeldenummer: 09450150.9
(22) Anmeldetag: 13.08.2009
(51) Int. Cl.: A01G 3/04, A01G 17/02

(54) **Vorrichtung zur Anbringung von Arbeitsgeräten**

(30) Priorität: 01.09.2008 AT 13572008
(71) Anmelder: Huber, Alfred, 3134 Nussdorf (AT); Schrefl, Franz, 3134 Nussdorf (AT)
(72) Erfinder: Alfred Huber, 3134 Nussdorf (AT)
(74) Vertreter: Rippel, Andreas

(57) **Zusammenfassung**

Bei einer Vorrichtung zur Anbringung von Arbeitsgeräten, mit denen eine beidseitige Bearbeitung bzw. Behandlung von in Zeilen gepflanzten Wein- oder Obstkulturen erfolgen kann, trägt ein an einem Fahrzeug anzubringender Mast (2) einen die Zeile von oben umfassenden U-förmigen Rahmen (4, 5, 6) trägt, an dem die Arbeitsgeräte befestigt sind.

Die beiden Schenkel (4, 5) des U-förmigen Rahmens (4, 5, 6) sind schwenkbar miteinander verbunden.

Dadurch wird eine Vorrichtung geschaffen, die bei verschiedenen Breiten der Pflanzzeilen einsetzbar ist und die auch Hindernisse überwinden kann.

## Beschreibung

Die Erfindung bezieht sich auf eine Vorrichtung zur Anbringung von Arbeitsgeräten, mit denen eine beidseitige Bearbeitung bzw. Behandlung von in Zeilen gepflanzten Wein- oder Obstkulturen erfolgen kann, wobei ein an einem Fahrzeug anzubringender Mast einen die Zeile von oben umfassenden U-förmigen Rahmen trägt, an dem die Arbeitsgeräte befestigt sind, wobei die beiden Schenkel des U-förmigen Rahmens schwenkbar miteinander verbunden sind.

Bekannte Vorrichtungen haben den Nachteil, dass sie nur bei einer beschränkten Breite der Pflanzzeilen eingesetzt werden können und auch bei Auftreten eines Hindernisses, z. B. durch einen in den Arbeitsweg ragenden Weinstock, nicht mehr weiter arbeiten können.

Aus der DE 196 45 615 C2 ist ein ein- oder doppelseitiges Weinlaub-Schneidgerät für einen Weinbergschlepper bekannt, bei dem als Tragstütze eine oder mehrere lotrecht angeordnete teleskopartig ausfahrbare Tragsäulen vorgesehen sind, wobei jede Tragsäule über eine an ihrem unteren Ende befestigte Tragplatte mit einer an der Vorderseite des Traktors angeordneten Anschlussplatte verbunden ist und an ihrem oberen Ende über mindestens einen nach vom gerichteten Tragarm im freien Abstand eine Quertraverse trägt, auf der ein das Schneidwerk tragender Schlitten waagrecht verstellbar geführt ist. Zur Durchführung einer Seitenverschwenkung ist ein Elektromotor mit Hubspindel erforderlich.

Die DE 24 25 612 A1 beschreibt eine Vorrichtung zum Aufheften von Rebtrieben und ähnlichen Pflanzen, wobei die herabhängenden Triebe mittels zweier schiefer Ebenen aufgerichtet und mit den gleichzeitig eingezogenen Fäden oder Drähten in ihrer neuen Stellung gehalten werden. Dabei ist an einem Weinbergschlepper ein höhenverstellbarer Grundrahmen angebaut, der an seinem oberen Ende einen Ausleger besitzt, welcher über die Rebzeile ragt und das eigentliche Gerät trägt. Die Vorrichtung weist dabei schwenkbar befestigte Arme auf, die an ihren unteren Enden je eine schiefe Ebene tragen. Druckfedern führen dabei über die Arme die schiefen Ebenen auch bei ungenauer Fahrweise immer dicht an den Rebstöcken vorbei. Durch die vielen Einzelteile und Gelenke ist die Vorrichtung relativ aufwendig, schwer handhabbar und weist ein hohes Gewicht auf. Dies trifft auch auf die Vorrichtung nach der DE 196 45 615 C2 zu.

Die Erfindung hat es sich zum Ziel gesetzt, eine Vorrichtung der eingangs genannten Art zu schaffen, die bei verschiedenen Breiten der Pflanzzeilen einsetzbar ist und die auch Hindernisse überwinden kann.

Erreicht wird dies bei einer Vorrichtung der eingangs genannten Art dadurch, dass ein Verbindungssteg der beiden Schenkel zwei ineinander greifende U-förmige Enden aufweist, die durch einen Lagerbolzen schwenkbar miteinander verbunden sind.

Durch die erfindungsgemäß schwenkbare Verbindung der beiden Schenkel des U-förmigen Rahmens können diese auseinander bewegt werden, sodass auch in breite Pflanzenzeilen eingefahren werden kann. Auch kann bei Auftreten eines Hindernisses der oder die Schenkel ausschwenken. Im Vergleich zu den Vorrichtungen nach den beiden genannten Dokumenten weist die erfindungsgemäße Vorrichtung mit einem einzigen Gelenk eine äußerst geringe Anzahl an Einzelteilen auf, wodurch das Gewicht trotz hoher Robustheit sehr gering gehalten werden kann. Die Vorrichtung zeichnet sich im Vergleich zum Stand der Technik durch einfache Handhabbarkeit aus, ein separater Elektromotor zur Querverstellung ist nicht erforderlich

Nachstehend ist die Erfindung anhand eines in den Zeichnungen dargestellten Ausführungsbeispieles näher beschrieben, ohne auf dieses Beispiel beschränkt zu sein.
Dabei zeigen in jeweils schaubildlicher Ansicht:

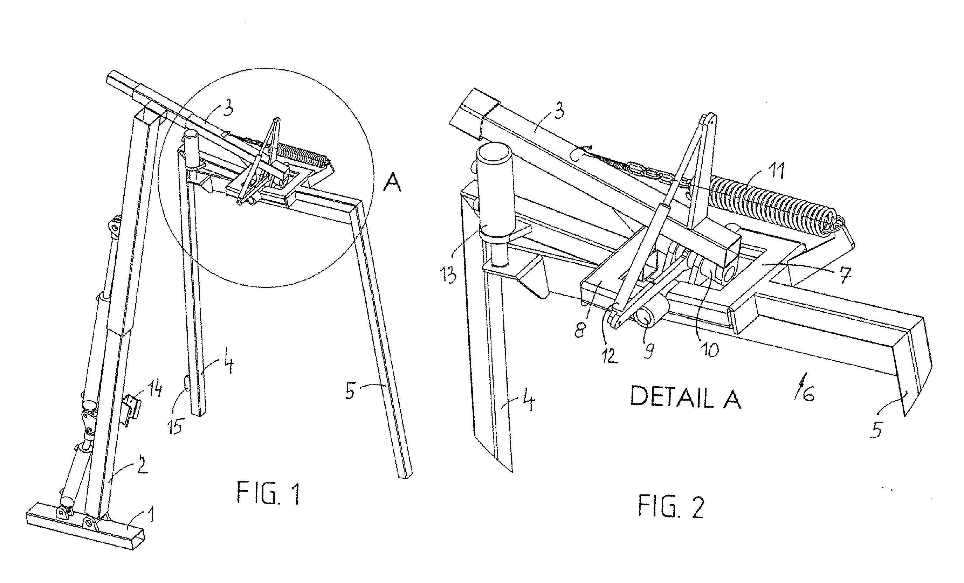

- Fig. 1: eine Ansicht der erfindungsgemäßen Vorrichtung von hinten;
- Fig. 2: in vergrößertem Maßstab das Detail A in Fig. 1;
- Fig. 3: eine Ansicht der erfindungsgemäßen Vorrichtung von vorne;
- Fig. 4: in vergrößertem Maßstab das Detail A in Fig. 3, welches dem Detail A in Fig. 2, jedoch von der anderen Seite her entspricht.

Auf einer mit dem Fahrzeug verbundenen Konsole 1 ist ein Mast 2 schwenkbar gelagert. Am Mast 2 ist ein dazu quer verlaufender Träger 3 befestigt, an dem ein U-förmiger Rahmen aufgehängt ist. Der U-förmige Rahmen besteht aus den beiden Schenkeln 4, 5 und dem beide Schenkel 4, 5 verbindenden Verbindungssteg 6. Dieser Verbindungssteg 6 weist zwei U-förmige Enden 7, 8 auf, die durch einen Lagerbolzen 9 schwenkbar miteinander verbunden sind.

Der Lagerbolzen 9 trägt zwischen den ineinander greifenden U-förmigen Enden 7, 8. ein Schwenklager 10 für eine Verschwenkung des U-förmigen Rahmens 4, 5, 6 senkrecht zur Verschwenkung der ineinander greifenden U-förmigen Enden 7, 8.

Zur Vorspannung der beiden Schenkel 4, 5 ist zwischen den ineinander greifenden U-förmigen Enden 7, 8 eine Feder 11 angeordnet.

Zur Dämpfung der Verschwenkung des U-förmigen Rahmens 4, 5, 6 senkrecht zur Verschwenkung der ineinander greifenden U-förmigen Enden 7, 8 ist ein Dämpfer 12 oder eine Feder angeordnet.

Ein Hydraulikstempel 13 greift an den Schenkeln 4, 5 des U-förmigen Rahmens an, um bei Bedarf die Schenkel 4, 5 gegeneinander zu bewegen.

Im Betrieb schwingt (pendelt) die Vorrichtung nach der Erfindung in alle Richtungen selbstständig aus. In Fahrtrichtung wird die Pendelbewegung durch den mechanischen Dämpfer 12 oder eine Feder gehemmt, um bei einer ansteigenden Arbeitsfahrt bzw. bei der Anfahrt ein Zurückschlenkern zu verhindern und das Gerät stabil zu halten.

Die seitliche Pendelbewegung ist frei und leichtgängig, damit sich die Vorrichtung (beide Schenkel 4,5 des U-förmigen Rahmens) bei allen Hindernissen durch die Zeile bewegen kann.

Die seitlichen Schenkel 4,5 können durch die Feder 11 beliebig vorgespannt werden, um bei einem Widerstand ein leichtes selbstständiges Öffnen zu gewährleisten. Die gewollte mechanische, seitliche Öffnung der Schenkel 4,5 für ein sicheres und bequemes Einfädeln in die Zeile und bei breiteren Zeilen erfolgt durch den Hydraulikstempel 13.

Der Rahmen 4,5,6 ist vor dem Trägerfahrzeug auf der Konsole 1 mit hydraulischer Seitenschwenkung (ca. 45°) montiert.

Die Konsole 1 besteht aus einem Grundelement, auf welcher der Drehpunkt mit dem höhenverstellbaren Mast 2 sowie der hydraulische Stempel aufgebaut sind. Die Seitenschwenkung, mit dem hydraulischen Stempel, ermöglicht das Gerät vor das Trägerfahrzeug (bei Fahrten auf der Straße), bzw. neben das Trägerfahrzeug (in den Arbeitsbereich) zu schwenken.

Für eine sichere Fahrt auf der Straße sorgt die Fixierung am Mast 2 vom Fahrersitz aus, ohne abzusteigen.

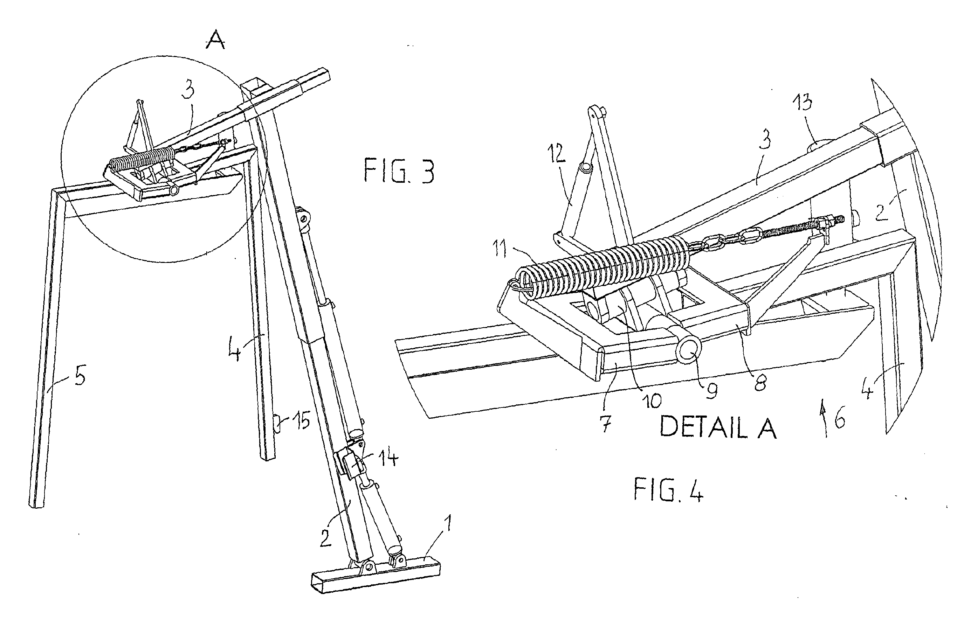

Bei einer Seitenschwenkung nach rechts (Fig. 3) legt sich der Schenkel 4 selbsttätig in die U-förmige Aufnahme 14. Bei einem Senken des Mastes 2 hängt sich der Haken 15 in die Aufnahme 14 ein und fixiert sich selbsttätig.

## Patentansprüche

1. Vorrichtung zur Anbringung von Arbeitsgeräten, mit denen eine beidseitige Bearbeitung bzw. Behandlung von in Zeilen gepflanzten Wein- oder Obstkulturen erfolgen kann, wobei ein an einem Fahrzeug anzubringender Mast (2) einen die Zeile von oben umfassenden U-förmigen Rahmen ( 4, 5, 6) trägt, an dem die Arbeitsgeräte befestigt sind, wobei die beiden Schenkel ( 4, 5) des U-förmigen Rahmens ( 4, 5, 6) schwenkbar miteinander verbunden sind, **dadurch gekennzeichnet, dass** ein Verbindungssteg (6) der beiden Schenkel ( 4, 5) zwei ineinander greifende U-förmige Enden (7, 8) aufweist, die durch einen Lagerbolzen (9) schwenkbar miteinander verbunden sind.

2. Vorrichtung nach Anspruch 1, **dadurch gekennzeichnet, dass** der Lagerbolzen zwischen den ineinander greifenden U-förmigen Enden (7, 8) ein Schwenklager (10) für eine Verschwenkung des U-förmigen Rahmens (4, 5, 6) senkrecht zur Verschwenkung der ineinander greifenden U-förmigen Enden (7, 8) trägt.

3. Vorrichtung nach Anspruch 1 oder 2, **dadurch gekennzeichnet, dass** zwischen den ineinander greifenden U-förmigen Enden (7, 8) eine Feder (11) angeordnet ist.

4. Vorrichtung nach Anspruch 2 oder 3, **dadurch gekennzeichnet, dass** zur Dämpfung der Verschwenkung des U-förmigen Rahmens (4,5,6) senkrecht zur Verschwenkung der ineinander greifenden U-förmigen Enden (7, 8) ein mechanischer Dämpfer (12) oder eine Feder angeordnet ist.

5. Vorrichtung nach einem der Ansprüche 1 bis 4, **dadurch gekennzeichnet, dass** an den Schenkeln (4, 5) des U-förmigen Rahmens (4, 5, 6) ein Hydraulikstempel (13) angreift.
